# EUROPEAN PATENT APPLICATION

(11) **EP 3 109 758 A1**
(43) Date of publication of application: **28.12.2016**
(21) Application number: 15173770.7
(22) Date of filing: 25.06.2015
(51) Int. Cl.: G06F 9/50, G06F 9/455

(54) **METHOD AND APPARATUS FOR SCALING AN APPLICATION**

(71) Applicant: ALCATEL LUCENT, 92100 Boulogne-Billancourt (FR)
(72) Inventor: Heralla, Islam, 44000 KFAR SABA (IL)
(74) Representative: Cabinet Camus Lebkiri

(57) **Abstract**

The invention relates to a device, non-transitory computer-readable storage medium and method for scaling an application in a cloud based architecture, characterized in that the method comprises the following steps:
- Creating a first container, the first container being configured to run the application;
- Deploying the first container on a host machine for execution by a container execution engine;
- Evaluating a trigger condition for scaling the application and if the condition is evaluated to true:
- Creating a second container, as a copy of the first container;
- Deploying the second container on the host machine for execution by the container execution engine.

## Description

### FIELD OF THE INVENTION

The invention relates generally to method and apparatus for scaling an application.

### BACKGROUND

Nowadays, more and more applications are set up in cloud based architectures. Cloud based architecture is also known as laaS (Infrastructure as a Service) or PaaS (Platform as a Service).

Cloud based architectures are based on physical environments, that is physical servers, allowing the virtualization of application. Most of the time an application is virtualized by using one or more virtual servers running the software components of the application.

For an application, one of the virtual servers is hosted by a given physical server at a point in time.

It should be appreciated that the demand on the application by users may increase to a point where the initial configuration no longer allows the application to meet operational requirements.

In such case, the traditional strategy to scale the application is to move one or more of the virtual servers related to the application to new, more powerful, physical hosts.

This is also true for application based on the use of containers, such as Docker containers. A container is a minimalistic environment allowing the execution of one or more part of an application. By minimalistic one mean it comprises only the components needed by the one or more part. The container himself is handled by a container engine. A container handled by a container engine can be considered as an isolated machine running the one or more parts. The difference with a true isolated machine is the weight of the container. A container is much lighter, in terms of components, than a full machine.

By part one means, file server, http server, database server, web service,... The list is not exhaustive, and given as an illustration of what a part is.

By component one means operating system component and libraries shared or not.

In case of scaling such a container based application, the containers are moved from one physical host to another physical host depending on the power of the physical hosts. Such scaling is known, for example, from Cloudify, Kubernetes or Swarm.

This scaling implies the provisioning of new machines and new storage means, which is the use of new resources. In some circumstances, this is a waste of resources as previous resources are no longer used and/or have not been optimally used.

### SUMMARY

The solution according to the invention is to condition a scaling based on two different methodologies. The first methodology is the traditional one, which is the scaling is made by provisioning new resources. The second methodology, according to the invention, is to provision a new container on existing resources.

The condition to elect one methodology or the other is based on the evaluation of a configuration. The configuration may comprise: user preference and/or one or more condition on exploitation metrics.

To this end the invention relates to a method for scaling an application in a cloud based architecture, characterized in that the method comprises the following steps:
- creating a first container, the first container being configured to run the application;
- deploying the first container on a host machine for execution by a container execution engine; evaluating a trigger condition for scaling the application and if the condition is evaluated to true:
   - creating a second container, as a copy of the first container;
   - deploying the second container on the host machine for execution by the container execution engine.

In another embodiment the host machine of the container execution engine is a physical machine.

In another embodiment the host machine of the container execution engine is a virtual machine.

In another embodiment, the trigger condition is based on a user configuration enabling the creation of the second container as a methodology for scaling the application, the method comprises step of:
- storing a user preference for the methodology of scaling the application.

The invention also relates to an application management system to manage at least an application, the management system characterized in that the management system comprises:
- a data storage system;
- a processor in communication with the data storage system, the processor being configured to:
   - create a first container, the first container begin configured to run the application;
   - deploy the first container on a host machine for execution by a container execution engine;
   - evaluate a trigger condition for scaling the application, and if the condition is evaluated to true:
      - create a second container, as a copy of the first container;
      - deploy the second container on the host machine for execution by the container execution engine.

In another embodiment the host machine of the container execution engine is a physical machine.

In another embodiment the host machine of the container execution engine is a virtual machine.

In another embodiment, the trigger condition is based on a user configuration enabling the creation of the second container as a methodology for scaling the application, the method comprises step of:
- storing a user preference for the methodology of scaling the application.
   The invention also relates to a non-transitory computer-readable storage medium storing instructions characterized in that, when executed by a computer, cause the computer to perform a method, the method comprising:
   - creating a first container, the first container being configured to run the application;
   - deploying the first container on a host machine for execution by a container execution engine;
   - evaluating a trigger condition for scaling the application and if the condition is evaluated to true:
      - creating a second container, as a copy of the first container;
      - deploying the second container on the host machine for execution by the container execution engine.

In another embodiment the host machine of the container execution engine is a physical machine.

In another embodiment the host machine of the container execution engine is a virtual machine.

In another embodiment, the trigger condition is based on a user configuration enabling the creation of the second container as a methodology for scaling the application, the method comprises step of:
- storing a user preference for the methodology of scaling the application.

Besides the main characteristics that have just been mentioned in the preceding paragraph, the method / device according to the invention may have one or more of the following additional characteristics, taken individually or as technically possible combinations:

### BRIEF DESCRIPTION OF THE DRAWINGS

Some embodiments of methods in accordance with embodiments of the present invention are now described, by way of example only, and with reference to the accompanying drawings, in which:
- Figure 1: schematically illustrates an application management system according to one embodiment;
- Figure 2: schematically illustrates the steps of a method according to one embodiment;

### DESCRIPTION OF EMBODIMENTS

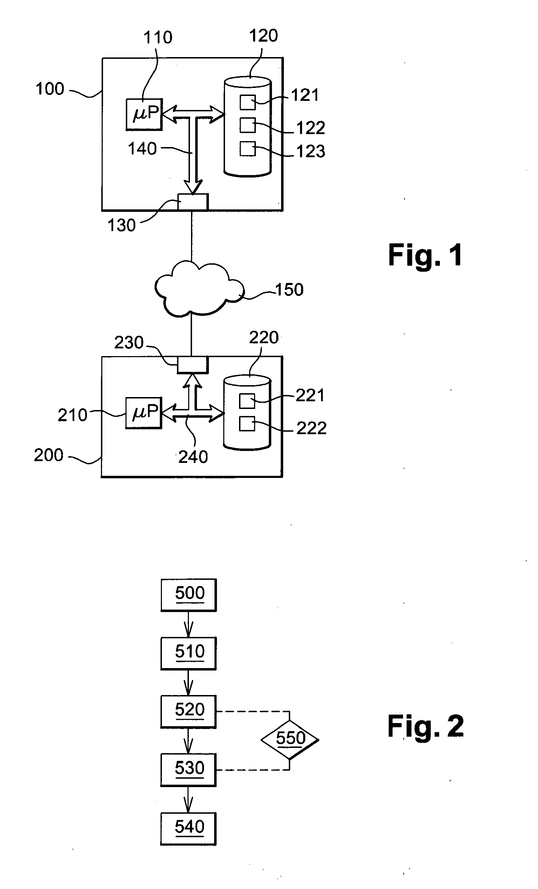

The figure 1 shows an application management system 100 according to the invention. An application management system according to the invention is a device comprising at least:
- A processor 110;
- A data storage system 120;
- An I/O interface 130.

The processor 110 cooperates with the data storage system 120 and the I/O interface 130, via a system bus 140. The processor 110 controls the various operations of the application management system 100. When a system acts, this is done by a processor of said system driven by instruction codes stored in a data storage system of the system. Usually instruction codes are loaded from the data storage system and correspond to an application or a part of an application. Consequently, an application can act too.

In some embodiments, the processor 110 may include resources such as processors/CPU cores, the I/O interface 130 may include any suitable network interfaces, and the data storage system 420 may include one or more storage devices such as magnetic storage, flash data storage, random access data storage, read only data storage, or any other suitable storage device. The data storage system may be local or distant.

In some embodiments, the system 100 may be virtual machine. In some of these embodiments, the virtual machine may include components from different machines or be geographically distributed. For example, the data storage system 120 and the processor 110 may be in two different physical machines.

The data storage system 120 may store the instruction codes implementing the steps according to the invention. For example, the data storage system 120 may store an operating system 121 for managing the various hardware resources and providing common services to other instruction sets executed by the processor 110.

Figure 1 also shows that the data storage system 120 of the application management system 100 comprises:
- A management part 122 comprising instruction codes corresponding to an implementation of steps of the present invention;
- A configuration part 123 configured to store user data such as:
   - User preference for methodology to scale an application;
   - User preference for trigger an application scaling;
   - ...

Figure 1 also shows that the application management system 100 is connected to a host machine 200 through a network 150. The host machine 200 comprises:
- A processor 210;
- A data storage system 320;
- An I/O interface 230.

The processor 210 cooperates with the data storage system 220 and the I/O interface 230, via a system bus 240. The host machine 200 has essentially components equivalent to those of the application management system 100. The host machine 200 and/or the application management system 100 may be a virtual machine in a cloud or a physical machine.

In addition to a non-illustrated operating system, the host machine data storage system comprises:
- A container execution engine part 221 comprising instruction code corresponding to the implementation of a container execution engine, for example a Docker engine;
- A container repository part 222 being configured to store one or more container runnable by the container execution engine.

A container is configured to run a whole application or a part of an application. A part of an application may be a database server, a storage/file server, an execution server (also known as an application server), a computation server, a web server... the list is not exhaustive.

As described the application management system is able to deploy a container on the host system. Typically a contained is associated with a user, the owner of the container. The deployed container is read from a storage system by any suitable protocol and copied in the container repository part. Once copied, the container is handled by the container execution engine to run the container function.

In one example the container comprises a tomcat server. In this case, the container handled by the container execution engine acts as the tomcat server.

In some embodiments, once the container is deployed the application management system monitors the exploitation metrics of the handled container. In particular, the application management system monitors a metric configured by the associated user for the deployed container. Such a configuration is a threshold related to exploitation metric, this threshold and a related exploitation metric identifier being stored in the configuration part of the data storage system of the application management system. For example the threshold is a number of active connections on the tomcat server.

According to other embodiment the threshold may be related to network query per unit of time, cpu usage per unit of time, disk usage per unit of time, memory usage... the list is not exhaustive.

If the threshold is reached, then the application management system scales the application according to a preference of the user. In the invention there is one preference on the methodology for scaling. The user may choose to scale by creating a new container. A new copy of the container is then stored in the container repository of the host machine. The new container is handled by the container execution engine.

Figure 2 shows a step 500 of creation of a first container. The first container is configured to run an application. Considering that the application is a tomcat server.

One will understand that the application may be much more complex and involve more than one container. But considering one application running with one container is enough to illustrate the invention.

Step 500 of creation of the first container is to build a container comprising required resources (i.e. application components, libraries,...) to execute his function. In the considered sample, those resources are a tomcat server.

Once the first container created, it is deployed, in a deploying step 510, on the host machine. Deploying the application is, for example, copying the container in the repository container of the host machine. Once in the repository, the container is handled by the container execution engine and all occur as if there is a new tomcat server in the network.

The application management system may then enter into a step 520 on evaluation of a trigger condition for scaling the application. That is in our case a trigger condition for scaling the tomcat server. Such a trigger condition is, for example, a number of active connections to the tomcat server. In practice such a condition may depends on one or more available exploitation metrics. Exploitation metrics are, for example:
- CPU usage, instant or per time unit,
- I/O usage, instant or per time unit,
- Memory usage, instant or per time unit,
- ...

The trigger condition is stored, at a configuration time, in the configuration part of the data storage system of the application management system. Said trigger condition is also associated with the deployed container. Such a condition comprises, for example:
- A metric identifier,
- A comparison operator,
- A threshold.

The metric can be evaluated at the container level, or at the host machine level.

In another embodiment a trigger condition may also be an action of the user explicitly commanding the scaling independently of any exploitation situation.

If the trigger condition is evaluated to true, then the application management system runs a step 530 of creation of a second container, copy of the first container. This step is identical to the step of creation of the first container.

Once the second container created, the application management system deploys it as the first container in a step 540 of deploying the second container.

From this step of deploying the second container the application is scaled and the connections are shared between the first and second container.

In another embodiment of the invention there is a step 550 of electing a methodology for scaling the application. The election process may select the "scaling with a new container" methodology, that is step 530 of creation of a second container, or select the classical methodology that is move the first container to a new more powerful host machine.

The step 550 of electing methodology for scaling depends on, for example, a preference of the user. Such a preference is stored, at a configuration time, in the configuration part of the data storage system of the application management system.

In another embodiment, the step 550 of electing methodology for scaling depends on checking the physical resources state of the host machine when the scaling method exceeded, and if resources are idle (the CPU , mem ..etc) means that we can use the "scaling with a new container" methodology.

In another embodiment, the step 550 of electing methodology for scaling depends on tracking and learning the application during his whole lifecycle and figure out what to do when the scaling method exceeded. For example if from the moment that the application is up till that the scaling metric exceed the whole physical resources are in the same average means that we can create new container instead of creating new machine, a contrario, if the machine is not idle and the cpu average is more than 80% that means that we cannot use new container and we have to create new machine

With the invention a user has the ability to decide wither the application need a new machine or not and if the application does not need new machine we can use the docker in order to create new container and provision the application on it. For example if the application is just a tomcat server we can ask the user to define the scaling limit in the interface definition for example the scaling limit is just the number of connection on the tomcat and we cannot create new tomcat on the same machine we will create a new docker container and provision the tomcat on it , in this methodology we save a new resource for both the system and the user.

## Claims

1. Method for scaling an application in a cloud based architecture, **characterized in that** the method comprises the following steps:
- creating (500) a first container, the first container being configured to run the application;
- deploying (510) the first container on a host machine for execution by a container execution engine;
- evaluating (520) a trigger condition for scaling the application and if the condition is evaluated to true:
- creating (530) a second container, as a copy of the first container; and
- deploying (540) the second container on the host machine for execution by the container execution engine.

2. Method for scaling an application in a cloud based architecture according to claim 1, **characterized in that** the host machine of the container execution engine is a physical machine.

3. Method for scaling an application in a cloud based architecture according to claim 1, **characterized in that** the host machine of the container execution engine is a virtual machine.

4. Method for scaling an application in a cloud based architecture according to any of preceding claims, **characterized in that** the trigger condition is based on an user configuration enabling the creation of the second container as a methodology for scaling the application, the method comprises step of:
- storing a user preference for the methodology of scaling the application.

5. Method for scaling an application in a cloud based architecture according to any of preceding claims, **characterized in that** the trigger condition is based on at least a preset threshold for an exploitation metric of the first container, such a metric being selected from the group consisting of at least: network query per unit of time, cpu usage per unit of time, disk usage per unit of time, memory usage.

6. Application management system to manage at least an application, the management system **characterized in that** the management system comprises:
- A data storage system;
- A processor in communication with the data storage system, the processor being configured to:
- Create a first container, the first container begin configured to run the application;
- Deploy the first container on a host machine for execution by a container execution engine;
- Evaluate a trigger condition for scaling the application, and if the condition is evaluated to true:
- Create a second container, as a copy of the first container;
- Deploy the second container on the host machine for execution by the container execution engine.

7. Application management system according to claim 6, **characterized in that** the host machine of the container execution engine is a virtual machine.

8. Application management system according to any of claims 6 or 7, **characterized in that** the trigger condition being based on an user configuration enabling the creation of the second container as a methodology for scaling the application, the processor is configured to:
- Store a user preference for the methodology of scaling the application.

9. Application management system according to any of claims 6 to 8, **characterized in that** the trigger condition is based on at least a preset threshold for an exploitation metric of the first container, such a metric being selected from the group consisting of at least: network query per unit of time, cpu usage per unit of time, disk usage per unit of time, memory usage.

10. A non-transitory computer-readable storage medium storing instructions **characterized in that**, when executed by a computer, cause the computer to perform a method, the method comprising:
- Creating a first container, the first container being configured to run the application;
- Deploying the first container on a host machine for execution by a container execution engine;
- Evaluating a trigger condition for scaling the application and if the condition is evaluated to true:
- Creating a second container, as a copy of the first container;
- Deploying the second container on the host machine for execution by the container execution engine.

11. A non-transitory computer-readable storage medium according to claim 10, **characterized in that** the host machine of the container execution engine is a virtual machine.

12. A non-transitory computer-readable storage medium according to any of claims 10 or 11, **characterized in that** the trigger condition is based on an user configuration enabling the creation of the second container as a methodology for scaling the application, the method comprises step of:
- Storing a user preference for the methodology of scaling the application.

13. A non-transitory computer-readable storage medium according to any of claims 10 to 12, **characterized in that** the trigger condition is based on at least a preset threshold for an exploitation metric of the first container, such a metric being selected from the group consisting of at least: network query per unit of time, cpu usage per unit of time, disk usage per unit of time, memory usage.
